# FASCICULE DE BREVET EUROPEEN

(11) **EP 0 812 620 B1**
(45) Date de publication et mention de la délivrance du brevet: **27.08.2003**
(21) Numéro de dépôt: 97401333.6
(22) Date de dépôt: 12.06.1997
(51) Int. Cl.: B01J 37/20

(54) **Procédé de présulfuration de catalyseurs d'hydrotraitement**
Verfahren zur Vorsulfidierung von Hydrobehandlungskatalysatoren
A method of presulfiding a hydrotreating catalyst

(30) Priorité: 12.06.1996 FR 9607283
(43) Date de publication de la demande: 17.12.1997
(73) Titulaire: EURECAT SA., 07800 La Voulte-sur-Rhône (FR)
(72) Inventeur: Dufresne, Pierre, 26000 Valence (FR); Brahma, Nilanjan, 07800 La Voulte Sur Rhone (FR)
(74) Mandataire: Benoist, François

(56) Documents cités:
- EP-A- 0 447 221
- EP-A- 0 448 435
- EP-A- 0 530 068
- EP-A- 0 564 317
- EP-A- 0 707 890
- EP-A- 0 785 022

## Description

La présente invention concerne un procédé de présulfuration ex situ de particules généralement poreuses de catalyseurs d'hydroconversion d'hydrocarbures. L'invention concerne également des procédés de présulfuration ex situ de particules poreuses de catalyseurs d'hydrotraitement suivis d'une activation in situ ou ex situ des catalyseurs ainsi sulfurés par un composé réducteur, notamment un gaz hydrogéné. L'invention concerne en outre l'utilisation de catalyseurs ainsi présulfurés et éventuellement activés pour l'hydroconversion de charges d'hydrocarbures.

Les catalyseurs d'hydroconversion sont utilisés sur une grande échelle dans l'industrie, par exemple pour l'hydrodésulfuration et/ou l'hydrodénitrogénation et/ou l'hydrodémétallisation de charges hydrocarbonées contenant des impuretés sulfureuses, azotées et/ou métalliques. Ils sont aussi couramment utilisés dans les cas où la charge contient des composants insaturés qui doivent être saturés : là encore, les catalyseurs d'hydrotraitement apportent une solution. Ces procédés sont également appelés procédés d'hydrotraitement. Il est également courant d'utiliser des charges hydrocarbonées d'hydrocrackage. Le fait de savoir quel procédé s'effectuera en réalité, et à quel degré, dépend des conditions choisies (charge, catalyseur, pression, température, etc). Dans tous ces procédés, la charge est mise en contact avec du gaz hydrogéné au sein d'un réacteur, dans des conditions comportant une pression et une température élevées.

Les catalyseurs d'hydroconversion sont bien connus de l'homme de l'art. Ils contiennent des métaux d'hydrogénation placés sur un support amorphe ou non, zéolitiques ou non ou des mélanges de ces supports.

Les métaux habituellement utilisés sont le cobalt, le nickel, le molybdène et le tungstène, généralement en combinaison, notamment des combinaisons cobalt/molybdène, nickel/molybdène, cobalt/tungstène et nickel/tungstène. En outre, les catalyseurs d'hydrotraitement peuvent contenir des métaux nobles, par exemple du platine, du palladium et/ou du rhénium.

Les substances les plus fréquemment utilisées comme support sont l'alumine, la silice, la silice/alumine et la magnésie. Le support peut également être constitué de ou contenir une zéolite, par exemple une zéolite de type Y. Normalement, lorsque l'on utilise des zéolites, elles sont employées en combinaison avec une ou plusieurs des autres substances citées servant de support.

Après la préparation du catalyseur, les métaux d'hydrogénation se présentent généralement sous forme oxydée. Ceci s'applique également aux catalyseurs usés qui ont été soumis à un traitement de régénération.

Il est connu depuis longtemps que les métaux doivent se présenter sous la forme de leurs sulfures pour obtenir des résultats optimaux. Les oxydes de métaux (ou les métaux eux-mêmes dans le cas de métaux de valence nulle) doivent donc être convertis en sulfures correspondants.

Cette sulfuration est traditionnellement réalisée in situ, c'est-à-dire au sein du réacteur dans lequel le catalyseur doit être utilisé, généralement en mettant les particules catalytiques en contact, dans le réacteur et à une température croissante, avec une combinaison de gaz hydrogéné et d'hydrogène sulfuré ou une combinaison de gaz hydrogéné et un flux d'hydrocarbures souvent additionné d'un composé soufré.

Des évolutions sont apparues au cours des dix à quinze dernières années et les sociétés spécialisées fournissent désormais le catalyseur avec la quantité de soufre ou de composé soufré requise pour la sulfuration finale ex situ, c'est-à-dire à l'extérieur du réacteur de traitement, généralement sur un autre site; ce procédé est appelé présulfuration ex situ. L'un des avantages d'une telle présulfuration ex situ réside dans le fait que le raffineur qui acquiert le catalyseur peut procéder à une activation de manière relativement aisée; il lui suffit, pour obtenir la formation de sulfures de métal souhaitée, de traiter le catalyseur avec un gaz hydrogéné au sein du réacteur de traitement. Les autres principaux avantages de ce procédé résident dans le fait qu'il réduit la durée d'immobilisation du réacteur et qu'il évite au raffineur l'utilisation de produits chimiques toxiques tels que l'hydrogène sulfuré et les mercaptans.

Plusieurs des méthodes de présulfuration ex situ mises au point au cours des dernières années utilisent du soufre élément. Ces méthodes sont décrites, entre autres, dans les brevets US-4.943.547 et US-5.215.954. Les méthodes décrites dans le brevet US-4.943.547 comportent la mise en contact du soufre élément avec les particules catalytiques à présulfurer, soit sous forme de soufre en poudre, qui est ensuite sublimé dans les pores du catalyseur, le mélange obtenu étant ensuite mouillé avec une huile à point d'ébullition élevé ou un solvant hydrocarboné, soit sous forme d'une suspension préalablement préparée du soufre élément dans une huile à point d'ébullition élevé ou un solvant hydrocarboné. Dans le brevet US-5.215.954, qui fait suite au brevet US-4.943.547, on utilise une oléfine liquide au lieu d'une huile à point d'ébullition élevé ou d'un solvant hydrocarboné. Dans toutes ces méthodes, les particules catalytiques sont mises en contact avec du soufre élément sous forme solide et, comme il est divulgué dans les descriptions de ces brevets, le soufre élément pénètre dans les pores du catalyseur par sublimation et/ou par fusion.

Ces méthodes présentent l'inconvénient d'être difficiles à mettre en oeuvre, notamment à l'échelle commerciale. Il convient en effet de veiller à ce que le mélange de solides obtenu (les particules catalytiques et le soufre élément, soit sous forme de soufre en poudre, soit à l'état de suspension) soit aussi uniforme que possible en vue de permettre une pénétration du soufre élément dans le système poreux du catalyseur (par sublimation et/ou par fusion) aussi uniforme que possible. De plus, la pénétration du soufre élément dans les pores du catalyseur par sublimation ou par fusion nécessite un contrôle précis des conditions du procédé, ce qui ne peut être réalisé que difficilement.

Un brevet européen de la demanderesse EP-B-707 890 pallie ces inconvénients. Le procédé concerne un procédé de présulfuration de particules catalytiques utilisant du soufre élément, ce qui est relativement facile à réaliser et produit une distribution réellement homogène du soufre élément dans les pores du catalyseur. Ce procédé évite d'avoir à mélanger le soufre élément solide (soit sous forme de soufre en poudre, soit sous forme de suspension) avec les particules catalytiques solides. Il ne comporte pas non plus d'exigences relatives aux conditions du procédé en vue de s'assurer que le soufre élément va bien pénétrer dans les pores du catalyseur par sublimation et/ou par fusion. Le procédé se rapporte à un procédé de présulfuration ex situ de particules poreuses d'un catalyseur d'hydrotraitement sulfurable contenant au moins un métal ou un oxyde de métal, le procédé comportant la mise en contact du catalyseur avec un agent de présulfuration contenant du soufre élément et un liquide organique, le procédé comportant la préparation de l'agent de présulfuration sous forme d'un liquide sensiblement homogène et l'imprégnation des particules catalytiques avec ledit liquide, le soufre élément étant finalement sensiblement incorporé dans les pores du catalyseur. La présente invention se propose de perfectionner le procédé ci-dessus.

Les liquides organiques appropriés pour former l'agent de présulfuration sont ceux qui sont liquides à la température à laquelle s'effectue l'imprégnation avec les particules catalytiques et qui sont capables, soit seuls, soit en combinaison, de former un liquide sensiblement homogène avec le soufre élément à cette température. L'expression "liquide sensiblement homogène" utilisée dans ce contexte se rapporte à un liquide dans lequel le soufre élément est sensiblement dissous dans le cas d'une température inférieure au point de fusion du soufre élément et, dans le cas d'une température supérieure au point de fusion du soufre, à un liquide qui, à cette température, est soit une solution chauffée, soit un mélange sensiblement homogène de liquides comportant du soufre liquide. Un examen visuel permet de déterminer si un agent de présulfuration est un liquide sensiblement homogène ou monophasique. On peut citer, à titre d'exemples non limitatifs de liquides organiques appropriés pour former l'agent de présulfuration, les hydrocarbures aromatiques tels que le benzène, le toluène, les xylènes, et des hydrocarbures plus complexes contenant un ou plusieurs noyaux aromatiques, ainsi que les mélanges d'hydrocarbures contenant des quantités substantielles de composants aromatiques tels que certains types de naphtas et de gasoils (gazoles), par exemple des naphtas et des gasoils (gazoles) provenant d'unités de cokéfaction et des gasoils (gazoles) légers de craquage catalytique. Le sulfure de carbone, le sulfure de diméthyle et le bisulfure de diméthyle constituent également des liquides organiques appropriés. On peut aussi citer d'autres exemples tels que les mélanges d'hydrocarbures les mélanges d'hydrocarbures aliphatiques, aromatiques et/ou oléfiniques, tels que les essences légères, les essences de type F, les essences de type white-spirit, les gasoils (gazoles) et les huiles minérales. Il est également possible d'utiliser des huiles lubrifiantes ou des bases lubrifiantes, soit sous forme de produits de synthèse, soit d'origine minérale. Les hydrocarbures oléfiniques peuvent aussi être employés. On appelle hydrocarbure oléfinique un hydrocarbure comportant au moins une liaison oléfinique et ayant au moins 8 atomes de carbone. Les hydrocarbures oléfiniques généralement utilisés sont ceux décrits dans le brevet US-5.215.954 cité ci-avant, par exemple le décène, le dodécène, les oléfines NEODENE®10, les oléfines NEODENE®14/16, ainsi que, de préférence, les triglycérides d'acides gras insaturés décrits dans le brevet US-5.397.756, par exemple l'huile de colza, l'huile de soja, l'huile de tournesol et les graisses animales.

Pour la préparation de l'agent de présulfuration à utiliser selon la présente invention, on pourra utiliser un de ces liquides organiques appropriés, mais il est également possible, et quelquefois même préférable, d'employer une combinaison, ou mélange, de deux ou de plusieurs d'entre eux. L'homme de l'art sera aisément en mesure de choisir le(s) liquide(s) approprié(s) correspondant à ses besoins.

Afin d'augmenter la solubilité du soufre élément, il est généralement recommandé d'opérer à température élevée lors de la préparation de l'agent de présulfuration et lors de l'étape d'imprégnation proprement dite, en vue de s'assurer que, lorsque l'agent de présulfuration pénètre dans les pores du catalyseur, il le fait sous la forme d'un liquide sensiblement homogène. En règle générale, dans ce mode de réalisation, les particules catalytiques à imprégner refroidissement prématuré de l'agent de présulfuration. La température de l'agent de présulfuration n'est pas nécessairement la même que celle des particules catalytiques.

Le mode de réalisation préféré du procédé selon l'invention consiste donc à effectuer l'imprégnation des particules catalytiques avec un agent de présulfuration ayant une température supérieure au point de fusion du soufre élément, et de préférence encore dans ce cas, les particules catalytiques elles-mêmes sont également préalablement portées à une température supérieure au point de fusion du soufre élément. Selon ce dernier mode de réalisation, il n'est pas non plus nécessaire que l'agent de présulfuration et les particules catalytiques soient à la même température. Les températures maximales pour l'agent de présulfuration et les particules catalytiques ne sont pas critiques et sont déterminées en fonction de considérations pratiques. En règle générale, on n'opère pas à des températures supérieures à 250°C.

Il est évident que, lorsque l'imprégnation s'effectue à température élevée, les liquides organiques dont le point d'ébullition est égal ou inférieur à cette température ne devraient pas être employés pour la préparation de l'agent de présulfuration.

Selon un mode de réalisation particulier du procédé selon l'invention, une deuxième "source de soufre" est incorporée à l'agent de présulfuration, en plus du soufre élément, sous la forme d'un polysulfure organique. De tels polysulfures organiques sont décrits entre autres dans le brevet US-4.530.91/ et répondent à la formule générale R-S(n)-R', où n est compris entre 3 et 20 et R et R' représentent des portions organiques; R' peut également être un atome d'hydrogène. Les et R' représentent des portions organiques; R' peut également être un atome d'hydrogène. Les polysulfures organiques aisément utilisables comprennent ceux où R et R' représentent chacun un radical butyle tertiaire, un radical nonyle tertiaire ou un radical dodécyle tertiaire, n ayant une valeur moyenne de 5. Ces trois produits sont commercialisés par Elf Aquitaine respectivement sous les appellations commerciales TPS-54, TPS-37 et TPS-32. Les polysulfures di-octyliques peuvent également être utilisés. Les avantages qu'offre l'utilisation d'une combinaison de soufre élément et de polysulfures organiques, notamment un démarrage plus rapide, sont divulgués dans le brevet US-5.139.983.

Cette combinaison utilisée dans le présent procédé présente l'avantage particulier selon lequel l'emploi simultané d'un ou de plusieurs polysulfures organiques au sein de l'agent de présulfuration facilite l'obtention d'un liquide sensiblement homogène.

En termes de volume, la quantité d'agent de présulfuration à utiliser est généralement telle qu'elle correspond plus ou moins au volume global de pores de la masse catalytique à présulfurer. Plus précisément, le rapport volume d'agent de présulfuration sur volume total de pores du catalyseur à remplir est compris entre 0,6 et 1,1, de préférence entre 0,7 et 0,9.

Comme il est courant dans le cas de la présulfuration ex situ, la quantité totale de soufre à utiliser, c'est-à-dire la quantité de soufre élément ou la quantité de soufre élément en combinaison avec la quantité de soufre contenue dans le polysulfure organique, dépend de la quantité de métal ou d'oxyde de métal présente sur le catalyseur à présulfurer. D'une manière générale, la quantité totale de soufre employée correspond à 0,5 à 1,5 fois la quantité soufre à utiliser est de préférence comprise entre 0,7 et 1,2 fois la quantité stoechiométrique requise.

Lorsqu'une combinaison de soufre élément et d'un polysulfure organique est utilisée, le rapport entre ces deux sources de soufre est de préférence choisi de telle manière que 25 à 90 % en poids du soufre (calculé sous forme de S) introduit dans les pores du catalyseur proviennent du soufre élément, tandis que 10 à 75 % en poids proviennent du polysulfure organique.

A cet égard, il faut noter que ce que l'on appelle des catalyseurs d'hydrotraitement à oxyde(s) de métaux selon la présente invention sont :
- des catalyseurs d'hydrotraitement fraîchement préparés contenant des oxydes de métaux du groupe VIB et/ou de métaux non nobles du groupe VIII;
- des catalyseurs d'hydrotraitement régénérés ayant la même composition que celle indiquée ci-dessus pour les catalyseurs fraîchement préparés, à cette exception près qu'une portion des métaux n'est pas restaurée sous forme oxydée;
- des catalyseurs contenant des métaux nobles tels que le platine, le rhénium et/ou le palladium, même si ces métaux présentent une valence nulle; comme les oxydes de métaux, ces métaux peuvent être convertis en leurs sulfures.

Le procédé de présulfuration selon l'invention est également facile à mettre en oeuvre à des températures supérieures au point de fusion du soufre élément. Par exemple, l'agent de présulfuration est tout d'abord préparé dans un récipient en mettant en présence les composants désirés dans les quantités souhaitées. Ils sont ensuite chauffés, de préférence sous agitation, jusqu'à ce que le système soit sensiblement homogène. Les particules catalytiques sont aussi éventuellement chauffées dans un autre récipient, de préférence à une température égale ou supérieure à la température nécessaire pour former l'agent de présulfuration sensiblement homogène. Les particules catalytiques chauffées et l'agent de présulfuration chauffé sont ensuite mis en contact, sachant qu'il convient bien évidemment de veiller à empêcher autant que possible toute perte de chaleur. Il est possible soit d'ajouter les particules catalytiques chaudes à l'agent de présulfuration chaud, soit d'ajouter l'agent de présulfuration chaud aux particules catalytiques chaudes, par exemple en le(s) vaporisant ou en le(s) versant.

Bien que la longueur de l'étape d'imprégnation ne soit pas critique, l'imprégnation devra bien entendu être complète avant de procéder à l'étape suivante, des temps d'imprégnation compris entre 1 et 60 minutes étant généralement suffisants.

Dans la mesure où, comme il a été indiqué plus haut, la quantité d'agent de présulfuration correspond généralement plus ou moins au volume total des pores à remplir, la masse catalytique restant à l'issue de l'imprégnation sera de préférence "sèche".

Si un liquide relativement volatil tel que du white-spirit ou du toluène est utilisé, par exemple en vue d'obtenir le volume d'agent de présulfuration souhaité, des mesures peuvent être prises au cours d'une étape ultérieure afin d'éliminer totalement ou partiellement ce liquide par évaporation. Bien entendu, dans ce cas aussi, on aura une masse catalytique "sèche".

Généralement, en vue de son utilisation, le catalyseur présulfuré obtenu devra être activé, c'est-à-dire traité par exemple avec un flux de gaz hydrogéné à température élevée, afin de former le sulfure de métal recherché. Deux méthodes peuvent être mises en oeuvre à cet effet, la méthode in situ et la méthode ex situ, et la présente invention concerne également les procédés dans lesquels la présulfuration selon l'invention est suivie de ceux deux méthodes d'activation respectives.

Dans la méthode in situ, le catalyseur présulfuré est chargé dans le réacteur dans la raffinerie où il doit être utilisé. Il est ensuite activé en faisant passer un flux de gaz hydrogéné à travers le lit catalytique à une température finale d'environ 200° à 450°C. On utilise généralement un gradient de température croissant. Les temps d'activation classiques sont compris entre 0,5 h et un jour. L'expression "activation ex situ" signifie que le catalyseur présulfuré est traité par exemple avec un flux de gaz hydrogéné à l'extérieur du réacteur dans lequel le catalyseur doit être utilisé, souvent sur un autre site, et plus particulièrement sur le même site que celui sur lequel la présulfuration ex situ selon l'invention a été réalisée. D'une manière générale, le traitement s'effectue à une température comprise entre 150° et 700°C, de préférence entre 200° et 500°C, pendant une durée comprise entre environ 1 à 10 heures. Dans un mode de réalisation préféré du présent procédé, les particules catalytiques sont maintenues en mouvement au cours de l'étape d'activation, par exemple en effectuant l'activation dans une cuve de réacteur rotative. Compte-tenu de la pyrophoricité du catalyseur ainsi activé, il est préférable de procéder à un traitement de passivation après l'activation ex situ. Ceci peut être réalisé en faisant passer un flux de gaz oxygéné à travers la masse catalytique, provoquant ainsi l'adsorption de l'oxygène sur la surface du catalyseur, de préférence dans une proportion de 0,2 à 5 % en poids, de façon préférentielle encore dans une proportion de 0,8 à 3 % en poids par rapport au poids de catalyseur. Un autre moyen de passivation consiste à imprégner le catalyseur avec un liquide qui empêche l'oxydation des sulfures aux températures ambiantes. Les liquides appropriés sont les hydrocarbures, plus particulièrement les gasoils (gazoles) et les bases lubrifiantes telles qu'une huile synthétique ou minérale. Après l'opération de passivation, le catalyseur peut être transporté et chargé dans le réacteur d'hydrotraitement par le raffineur sans risque d'inflammation ou d'explosion. D'une manière générale, pour de plus amples détails concernant les méthodes d'activation ex situ, on peut se référer au document EP-A-95.402.216.6.

Enfin, la présente invention concerne l'utilisation des catalyseurs ainsi activés pour l'hydrotraitement de charges d'hydrocarbures. Les conditions d'hydrotraitement classiques comportent des températures comprises entre 100° et 425°C, des pressions partielles d'hydrogène comprises entre 0,2 et 15 MPa, des pressions totales comprises entre 0,5 et 20 MPa, des rapports hydrogène/huile compris entre 20 et 1500 Nl/l, et des VVH compris entre 0,1 et 15. Les conditions d'hydrocrackage classiques comportent des températures comprises entre 300° et 500°C, des pressions partielles d'hydrogène comprises entre 3 et 20 MPa, des pressions totales comprises entre 5 et 25 MPa, des rapports hydrogène/huile compris entre 200 et 2500 Nl/l, et des VVH compris entre 0,1 et 15.

Les exemples suivants illustrent l'invention, sans la limiter.

### Exemple 1:

### Emploi de TPS37 avec soufre élémentaire comme agent de présulfuration à 130°C

On se propose de présulfurer 150 g d'un catalyseur d'hydrodésulfuration renfermant en poids 5% de CoO et 20% de MoO3 sur support alumine. La solution de présulfuration renferme 17,2% volume en forme de soufre élémentaire (SE: commercialisé par Kali Chemie, Akzo) et 82,8% de TPS37 (polysulfure organique nommé di tertio nonyl polysulfure, commercialisé par Elf Atochem).

A 130°C, ce mélange de SE et TPS37 donne une solution parfaitement limpide. La solution est complétée avec 65,9% en volume de White Spirit, une essence lourde dont les points initiaux et finaux d'ébullition sont respectivement 200 et 250°C (désignée par HC1 dans le tableau 1).

L'imprégnation des pores du catalyseur est achevée par cette solution chaude à 130°C. On porte le solide ainsi imprégné à 230°C pendant 2 heures sous une pression de 10 Torr (1333 Pa, soit 13,33x10⁻³ bar), afin d'évaporer le solvant. Le produit obtenu contient 8,1% S et 5,2% de carbone. Ce catalyseur, dénommé par la suite catalyseur A, est caractérisé par l'extraction du soufre par une méthode type soxhlet et un test d'auto-échauffement (méthode ONU : cube grillagé de 2,5 cm d'arête). On présente les résultats et les conditions opératoires dans le tableau 1.

### Exemple 2:

### Emploi de TPS37 et soufre élémentaire comme agents de présulfuration en combinaison avec une huile de base type 150N à 130°C

150 g du catalyseur déjà utilisé dans l'exemple 1 est imprégné par une solution qui contient les quantités de TPS37 et soufre élémentaire identiques comme dans l'exemple 1. La solution obtenue est parfaitement limpide à 130°C. On ajoute à cette solution 38,1% en volume d'une huile de base type 150N (commercialisée par Mobil Lubrifiants et désignée par HC3 dans le tableau 1) et on complète avec 27,8% en volume avec du White Spirit, identique à celui utilisé dans l'exemple 1. Le solide imprégné à 130°C est porté à 230°C sous une pression de 10 Torr (1333 Pa, soit 13,33x10⁻³ bar) pendant deux heures afin d'évaporer le solvant. Le produit final renferme 7,0% en poids de soufre et de 14% en poids de carbone. Ce catalyseur, dénommé catalyseur B, est caractérisé par l'extraction par solvant selon une méthode type soxhlet et un test d'auto-échauffement. On présente les résultats et les conditions opératoires dans le tableau 1.

### Exemple 3:

### Emploi de TPS37 et soufre élémentaire comme agents de présulfuration à 110°C

150 g du catalyseur déjà utilisé dans les exemples 1 et 2 est imprégné à 110°C par une solution qui contient les mêmes quantités de TPS37 et soufre élémentaire que dans les exemples 1 et 2. Le catalyseur imprégné à 110°C avec la solution mentionnée ci-dessus est homogénéisé pendant 10 minutes à 110°C. Ensuite, une quantité de 65,9% en volume de White Spirit, une essence lourde, identique à celle des exemples 1 et 2 est consécutivement ajoutée à 110°C et homogénéisée pendant 10 minutes. Le solide imprégné à 110°C est porté à 230°C sous une pression de 10 Torr (1333 Pa, soit 13,33x10⁻³ bar) pendant deux heures afin d'évaporer le solvant. Le produit final renferme 8,0% en poids de soufre et de 5,3% en poids de carbone. Ce catalyseur, dénommé par la suite catalyseur C, est caractérisé par l'extraction de soufre par une méthode type soxhlet et un test d'auto-échauffement. On présent les résultats et les conditions opératoires dans le tableau 1.

### Exemple 4:

### Emploi de TPS37 et soufre élémentaire comme agents de sulfuration en combinaison avec une oléfine type C12 (ou 1-dodecene)

150 g du catalyseur déjà utilisé dans les exemples 1 - 3 est imprégné à 130°C par une solution qui renferme 18,4% en volume en forme de soufre élémentaire (commercialisé par Kali Chemie, Akzo), 38,2% en volume de TPS37 (commercialisé par Elf Atochem) et 43,6% en volume d'une oléfine type 1-dodecène (désignée par HC2 dans le tableau 1) à 130°C. Ce mélange de SE, TPS et C12 donne une solution parfaitement limpide. La solution est complétée à 130°C avec 56.8% en volume de White Spirit, une essence lourde dont les points d'ébullition initiaux et finaux sont respectivement 200 et 250°C. L'imprégnation des pores du catalyseur est achevée par cette solution chaude à 130°C. On porte le solide ainsi imprégné à 230°C pendant 2 heures sous une pression de 10 Torr (1333 Pa, soit 13,33x10⁻³ bar) afin d'évaporer le solvant. Le produit obtenu renferme 7,8% en poids de soufre et 10% poids de carbone. Ce catalyseur, dénommé par la suite catalyseur D, est caractérisé par l'extraction de soufre par une méthode type soxhlet et un test d'auto-échauffement. On présente les résultats et les conditions opératoires dans le tableau 1.

### Exemple 5:

### Emploi de TPS54 et de soufre élémentaire comme agents de sulfuration en combinaison avec une oléfine type C12 (ou 1-dodecène)

150 g du catalyseur déjà utilisé dans les exemples 1 - 4 est imprégné à 130°C par une solution qui renferme 21,3% en volume en forme de soufre élémentaire (commercialisé par Kali Chemie, Akzo), 28,2% en volume de TPS54 (commercialisé par Elf Atochem) et 50,5% en volume d'une oléfine de type 1-dodecène à 130°C. Cette solution est parfaitement limpide. La solution est complétée à 130°C avec 62,7% en volume de White Spirit, une essence lourde dont les points d'ébullition initiaux et finaux sont respectivement 200 et 250°C.
L'imprégnation des pores du catalyseur est achevée par cette solution chaude à 130°C. On porte le solide ainsi imprégné à 230°C pendant 2 heures sous une pression de 10 Torr (1333 Pa, soit 13,33 x 10⁻³ bars), afin d'évaporer le solvant. Le produit obtenu renferme 7,9% en poids de soufre et 9,7% en poids de carbone. Ce catalyseur, dénommé par la suite catalyseur E, est caractérisé par l'extraction de soufre par une méthode type soxhlet et un test d'auto-échauffement. On présente les résultats et les conditions opératoires dans le tableau 1.

### Exemple 6:

### Emploi de TPS37 et de soufre élémentaire comme agents de sulfuration en combinaison avec une oléfine type C12 (ou 1-dodecène), en utilisant p-xylene comme solvant.

150 g du catalyseur déjà utilisé dans les exemples 1 - 5 est imprégné à 130°C par une solution qui renferme 25,6% en volume en forme de soufre élémentaire (commercialisé par Kali Chemie, Akzo), 13,7% en volume de TPS37 (commercialisé par Elf Atochem) et 60,7% en volume d'une oléfine de type 1-dodecène. A 130°C cette solution est limpide. La solution est complétée à 130°C avec 60,1% en volume de p-xylène.

L'imprégnation des pores du catalyseur est achevée par cette solution chaude à 130°C. On porte le solide ainsi imprégné à 230°C sous pression atmosphérique afin d'évaporer le solvant. Le produit obtenu renferme 7,2% en poids de soufre et 12% en poids de carbone. Ce catalyseur, dénommé par la suite catalyseur F, est caractérisé par une méthode d'extraction de soufre selon une méthode type soxhlet et un test d'auto-échauffement. On présente les résultats et les conditions opératoires dans le tableau 1.

### Exemple 7:

### Emploi de soufre élémentaire et DMDS comme agents de sulfuration en combinaison avec une oléfine type C12 (ou 1-dodecène), en utilisant p-xylène comme solvant

150 g du catalyseur, déjà utilisé dans les exemples 1 - 6 est imprégné à 105°C par une solution qui renferme 5,4% en volume en forme de soufre élémentaire (commercialisé par Kali Chemie, Akzo), 81.9% en volume en forme de DMDS (diméthyl-disulfure, commercialisé par Elf Atochem) et 12,7% en volume d'une oléfine type C12 (ou 1-dodecène). A 105°C cette solution est limpide. La solution est complétée à 105°C avec 70,3% en volume de p-xylène.

L'imprégnation des pores du catalyseur est achevée par cette solution à 105°C. On porte le solide ainsi imprégné à 230°C sous pression atmosphérique afin d'évaporer le solvant. Le produit obtenu renferme 8,0% en poids de soufre et 5% en poids de carbone. Ce catalyseur, dénommé par la suite catalyseur G, est caractérisé par une méthode d'extraction de soufre selon une méthode type soxhlet et un test d'auto-échauffement. On présente les résultats et les conditions opératoires dans le tableau 1.

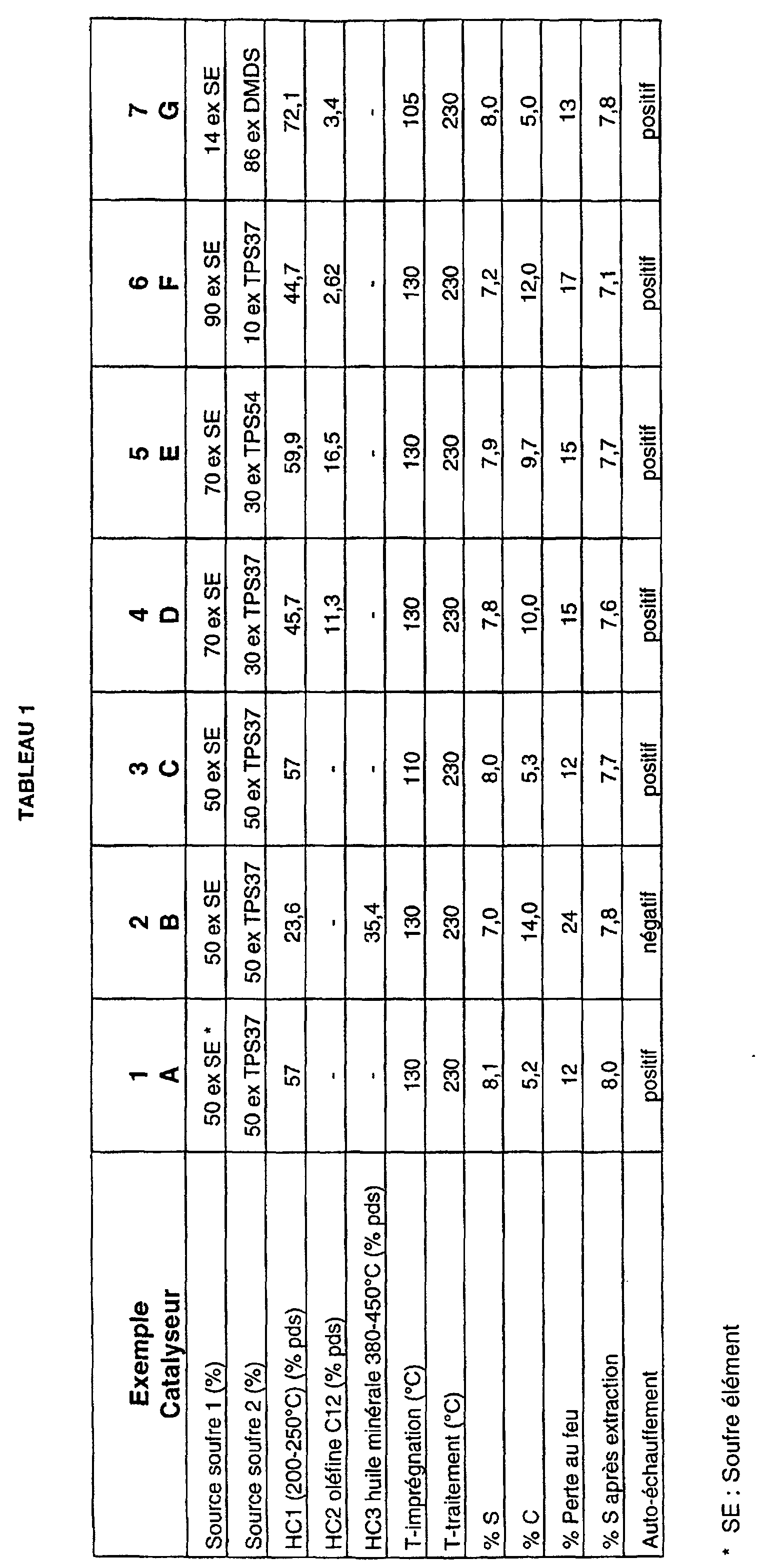

## Revendications

1. Procédé de présulfuration ex situ de particules poreuses d'un catalyseur d'hydroconversion d'hydrocarbures contenant au moins un métal ou oxyde de métal, comportant la mise en contact des particules catalytiques avec un agent de présulfuration contenant du soufre élément et au moins un liquide organique, comportant la préparation de l'agent de présulfuration sous la forme d'un liquide sensiblement homogène et l'imprégnation des particules catalytiques avec ledit liquide, ledit soufre élément étant en conséquence sensiblement incorporé dans les pores du catalyseur, **caractérisé en ce que** la préparation dudit agent de présulfuration comporte une étape de chauffe et **caractérisé en ce que**, au moment où démarre ladite mise en contact, l'agent de présulfuration est à une température supérieure au point de fusion du soufre élément.

2. Procédé selon la revendication 1, **caractérisé en ce que**, au moment où démarre ladite mise en contact, les particules catalytiques sont également à une température supérieure au point de fusion du soufre élément.

3. Procédé selon l'une quelconque des revendications précédentes, **caractérisé en ce que** l'agent de présulfuration contient en outre un polysulfure organique.

4. Procédé selon l'une quelconque des revendications précédentes, **caractérisé en ce que** le liquide organique est choisi parmi le groupe constitué d'un ou de plusieurs hydrocarbures aromatiques, d'un ou de plusieurs liquides de type essence, d'un ou de plusieurs gasoils (gazoles), d'une ou de plusieurs bases lubrifiantes, d'un ou de plusieurs hydrocarbures oléfiniques et de leurs combinaisons, d'au moins une essence de type white spirit.

5. Procédé selon la revendication 4, **caractérisé en ce que** l'hydrocarbure oléfinique est un triglycéride d'acide gras.

6. Procédé selon l'une quelconque des revendications précédentes, **caractérisé en ce que** le rapport volume d'agent de présulfuration sur volume de pores du catalyseur est compris entre 0,6 et 1,1.

7. Procédé selon l'une des revendications 1 à 6 **caractérisé en ce que** dans une étape suivante les particules catalytiques présulfurées sont traitées in situ ou ex-situ par un agent de réduction.

8. Procédé selon l'une quelconque des revendications précédentes, **caractérisé en ce que**, au cours d'une étape ultérieure, les particules catalytiques présulfurées sont soumises à un traitement ex-situ ou in situ avec un flux de gaz hydrogéné, à une température comprise entre 150°C et 700°C, en vue de sulfurer au moins une partie substantielle du métal ou des oxydes de métaux.

9. Procédé selon la revendication 8, effectué ex-situ.

10. Procédé selon la revendication 9, **caractérisé en ce que**, au cours dudit traitement avec un flux de gaz hydrogéné, les particules catalytiques sont maintenues en mouvement.

11. Procédé selon les revendications 9 ou 10, **caractérisé en ce que**, après ledit traitement avec un flux de gaz hydrogéné, les particules catalytiques sont soumises à un traitement de passivation.

12. Procédé selon la revendication 11 effectué en présence d'un courant d'un gaz contenant de l'oxygène.

13. Procédé selon l'une quelconque des revendications 1 à 6, **caractérisé en ce que**, au cours d'une étape ultérieure, les particules catalytiques présulfurées sont chargées dans un réacteur d'hydrotraitement et chauffées in situ, à une température comprise entre 200°C et 450°C, en présence d'un flux de gaz hydrogéné, de manière à sulfurer au moins une partie substantielle du métal ou des oxydes de métaux.

## Patentansprüche

1. Verfahren zur ex situ Vorschwefelung von porösen Teilchen eines Katalysators zur Hydrokonvertierung von Kohlenwasserstoffen, welcher mindestens ein Metall oder ein Metalloxid enthält, umfassend die Zusammenbringung von katalytischen Partikeln mit einem Vorschwefelungsagens, welches elementaren Schwefel und mindestens eine organische Flüssigkeit enthält, umfassend die Herstellung eines Vorschwefelungsagens in Form einer merklich homogenen Flüssigkeit und die Imprägnierung der katalytischen Teilchen mit dieser Flüssigkeit, wobei der besagte elementare Schwefel infolgedessen merklich in die Poren des Katalysators aufgenommen ist, **dadurch gekennzeichnet, daß** die Herstellung des besagten Vorschwefelungsagens eine Erwärmungsstufe beinhaltet und **dadurch gekennzeichnet, daß** das Vorschwefelungsagens im dem Moment, in dem die besagte Zusammenbringung anläuft, eine Temperatur oberhalb des Schmelzpunktes von elementarem Schwefel hat.

2. Verfahren nach Anspruch 1, **dadurch gekennzeichnet, daß** die katalytischen Teilchen in dem Moment, in dem die besagte Zusammenbringung anläuft, ebenfalls eine Temperatur oberhalb des Schmelzpunktes von elementarem Schwefel haben.

3. Verfahren nach einem der beiden vorhergehenden Ansprüche, **dadurch gekennzeichnet, daß** das Vorschwefelungsagens außerdem ein organisches Polysulfid enthält.

4. Verfahren nach einem der vorhergehenden Ansprüche, **dadurch gekennzeichnet, daß** die organische Flüssigkeit aus der Gruppe ausgewählt wird, die aus einem oder mehreren aromatischen Kohlenwasserstoffen, aus einer oder mehreren Flüssigkeiten vom Typ der Kraftstoffe, aus einem oder mehreren Gasölen, aus einem oder mehreren Schmierölen, aus einem oder mehreren olefinischen Kohlenwasserstoffen und deren Mischungen, aus mindestens einem Kraftstoff vom Typ Testbenzin gebildet wird.

5. Verfahren nach Anspruch 4, **dadurch gekennzeichnet, daß** der olefinische Kohlenwasserstoff ein Triglyzerid einer Fettsäure ist.

6. Verfahren nach einem der vorhergehenden Ansprüche, **dadurch gekennzeichnet, daß** das Verhältnis des Volumens des Vorschwefelungsagens zum Porenvolumen des Katalysators zwischen 0,6 und 1,1 liegt.

7. Verfahren nach einem der Ansprüche 1-6, **gekennzeichnet dadurch, daß** die vorgeschwefelten katalytischen Teilchen in einem folgenden Schritt in situ oder ex-situ mit einem Reduktionsagens behandelt werden.

8. Verfahren nach einem der vorhergehenden Ansprüche, **gekennzeichnet dadurch, daß** die vorgeschwefelten katalytischen Teilchen im Verlauf eines weiteren Schrittes einer ex-situ oder in situ Behandlung mit einem wasserstoffhaltigen Gasfluß bei einer Temperatur zwischen 150°C und 700°C unterzogen werden, um zumindest einen beträchtlichen Teil des Metalls oder der Metalloxide zu schwefeln.

9. Verfahren nach Anspruch 8, **gekennzeichnet dadurch, daß** es ex-situ durchgeführt wird.

10. Verfahren nach Anspruch 9, **dadurch gekennzeichnet, daß** die katalytischen Teilchen während der besagten Behandlung mit einem wasserstoffhaltigen Gasfluß in Bewegung gehalten werden.

11. Verfahren nach den Ansprüchen 9 oder 10, **dadurch gekennzeichnet, daß** die katalytischen Teilchen nach der besagten Behandlung mit einem wasserstoffhaltigen Gasfluß einer Passivierungsbehandlung unterzogen werden.

12. Verfahren nach Anspruch 11, durchgeführt in Gegenwart eines sauerstoffhaltigen Gasstromes.

13. Verfahren nach einem der Ansprüche 1-6, **dadurch gekennzeichnet, daß** die vorgeschwefelten katalytischen Teilchen im Verlauf eines weiteren Schrittes in einen Wasserstoffbehandlungsreaktor beschickt werden und in situ bei einer Temperatur zwischen 200°C und 450°C in Gegenwart eines wasserstoffhaltigen Gasflusses erhitzt werden, um zumindest einen beträchtlichen Teil des Metalls oder der Metalloxide zu schwefeln.

## Claims

1. A process for ex situ presulphurization of porous particles of a hydrocarbon hydroconversion catalyst containing at least one metal or metal oxide, comprising bringing the catalytic particles into contact with a presulphurization agent containing elemental sulphur and at least one organic liquid, comprising preparing the presulphurization agent in the form of a essentially homogeneous liquid and impregnating the catalytic particles with said liquid, said elemental sulphur as a result being substantially incorporated into the pores of the catalyst, **characterized in that** said preparation of said presulphurization agent comprises a heating step and **characterized in that**, at the moment when said contact is initiated, the presulphurization agent is at a temperature that is above the melting point of elemental sulphur.

2. A process according to claim 1, **characterized in that** at the moment when said contact is initiated, the catalytic particles are also at a temperature that is above the melting point of elemental sulphur.

3. A process according to any one of the preceding claims, **characterized in that** the presulphurization agent also contains an organic polysulphide.

4. A process according to any one of the preceding claims, **characterized in that** the organic liquid is selected from the group formed by one or more aromatic hydrocarbons, one or more gasoline type liquids, one or more gas oils, one or more lubricating bases, one or more olefinic hydrocarbons or combinations thereof, and at least one white spirit type gasoline.

5. A process according to claim 4, **characterized in that** the olefinic hydrocarbon is a fatty acid triglyceride.

6. A process according to any one of the preceding claims, **characterized in that** the ratio of the volume of presulphurization agent to the pore volume of the catalyst is in the range 0.6 to 1.1.

7. A process according to one of claims 1 to 6, **characterized in that** in a subsequent step, the presulphurized catalytic particles are treated in situ or ex situ by a reducing agent.

8. A process according to any one of the preceding claims, **characterized in that** during a subsequent step, the presulphurized catalytic particles undergo an ex situ or in situ treatment with a stream of hydrogen-containing gas, at a temperature in the range 150°C to 700°C, in order to sulphurize at least a substantial portion of the metal or metal oxides.

9. A process according to claim 8, carried out ex situ.

10. A process according to claim 9, **characterized in that** the catalytic particles are maintained in motion during said treatment with a stream of hydrogen-containing gas.

11. A process according to claim 9 or claim 10, **characterized in that** after said treatment with a stream of hydrogen-containing gas, the catalytic particles undergo a passivation treatment.

12. A process according to claim 11, carried out in the presence of a stream of a gas containing oxygen.

13. A process according to any one of claims 1 to 6, **characterized in that** during a subsequent step, the presulphurized catalytic particles are charged into a hydrotreatment reactor and heated in situ to a temperature in the range 200°C to 450°C in the presence of a stream of hydrogen-containing gas to sulphurize at least a substantial portion of the metal or metal oxides.
